# EUROPEAN PATENT SPECIFICATION

(11) **EP 2 455 523 B1**
(45) Date of publication and mention of the grant of the patent: **19.03.2014**
(21) Application number: 11189592.6
(22) Date of filing: 17.11.2011
(51) Int. Cl.: D06N 3/00, D04H 1/48, D04H 5/02, D04H 5/04, D04H 5/06, D06N 5/00, B32B 5/26, D04H 13/00, D04H 5/12

(54) **Chemically and thermally bonded textile support, in particular for bituminous membranes.**
Chemisch und thermisch gebundener textiler Träger, insbesondere für bitumenhaltigen Membrane
Support textile chimiquement et thermiquement lié, en particulier pour membranes bitumineuses

(30) Priority: 22.11.2010 IT MI20102152
(43) Date of publication of application: 23.05.2012
(73) Proprietor: POLITEX s.a.s. di FREUDENBERG POLITEX s.r.l., 20121 Milan (IT)
(72) Inventor: Migliavacca, Massimo, 20149 MILANO (IT); Faggion, Gilberto, 31033 CASTELFRANCO VENETO (TV) (IT)
(74) Representative: Mittler, Enrico

(56) References cited:
- EP-A1- 0 530 769
- EP-A2- 0 900 649
- WO-A1-01/03626
- WO-A1-2004/071760
- WO-A1-2008/128967
- WO-A1-2010/066307
- US-A- 3 837 343
- US-A- 5 118 550
- DATABASE WPI Week 200746 Thomson Scientific, London, GB; AN 2007-473104 XP002639628, & JP 2007 162583 A (TOYOTA JIDOSHA KK) 28 June 2007 (2007-06-28)
- DATABASE WPI Week 199517 Thomson Scientific, London, GB; AN 1995-127880 XP002639629, & JP 7 052299 A (UNITIKA LTD) 28 February 1995 (1995-02-28)

## Description

The present invention relates to a textile support suitable for waterproofing bituminous membranes.

The supports for bituminous membranes used for waterproofing roofs must satisfy many technical requirements.

Firstly, the supports must have mechanical properties suitable to bear the stresses to which they are subjected during the impregnation with bitumen and during the subsequent installation of the finished membranes on the roofs.

Furthermore, the supports must have excellent dimensional stability to mechanical and thermal stress, especially during the bitumen machining process.

In this regard, it is known the technique of coupling one or more synthetic fiber textile substrates with continuous high modulus yarns, e.g. made of glass or other mineral materials, either natural or synthetic, set in the longitudinal direction (US 5,118,550; US 4,539,254; US 6,131,351; EP 0806509).

The textile substrates and the reinforcement yarns are joined by means of mechanical needling or water entangling and consolidated by means of a chemical binder.

In other configurations, on the contrary, consolidation occurs thermally by melting a low-melting component added to the substrate in the form of fibers or filaments (US 4,504,539).

The known techniques allow to obtain supports with good stiffness and dimensional stability, to either avoid or reduce shrinkage during the production process.

However, the aforesaid supports often show localized defects on the edges of the rolls (longitudinal edges), which affect the quality of the products. Indeed, the longitudinal edges are points of least strength and stiffness, because of the variations of process conditions (tensions, temperature) they are subjected during the production or, in case of supports with reinforcement elements, because of the lower reinforcement-matrix adhesion force (consequent to the aforesaid variable process conditions), so they bend down and fold onto themselves during the bitumen impregnation. When this occurs, the product is faulty and thus downgraded, otherwise, in order to solve the problem, the production speed must be reduced, with consequent economic damage.

In addition, when filaments or other reinforcement elements are set between two or more substrate layers, a discontinuity is generated which may lead to de-lamination, so to the split-up into layers of the textile substrate. In the case of supports for bituminous membranes used for waterproofing of the roofs, this may lead over time to the partial detachment of the textile layers, as a result of the aging of the membrane and of the many thermal cycles to which is subjected, with the consequent risk of loss of the waterproofing performance.

According to the state of the art, the purpose of the present invention is to make a textile support for bituminous membranes which can overcome the drawbacks described above.

According to the present invention, this purpose is reached with a textile support, particularly for bituminous membranes, consisting of at least one layer of non-woven fabric of synthetic fibers and a binding component having a melting point lower than that of the synthetic fibers of the layer of non-woven fabric, the assembly formed by said layer of the non-woven fabric and said binding component, being subjected to a thermal treatment for the melting of the binding component and being then consolidated by resin impregnation; characterized in that said binding component has a melting point from 30 to 50 °C lower than the melting point of the synthetic fibres of the non-woven fabric and said binding component is present on the edges of the textile support in a greater quantity compared to the remaining surface of the textile support.

Example of binding components are: polybutylene terephthalate, polyamide 6, co-polyester, co-polyamide, polyurethanes.

The binding component is distributed over the entire surface of the layer of non-woven fabric to the extent of 0.5 to 5 g/m², preferably between 1.5 and 3 g/m², while in the edge's area of the finished textile support the binding component is added between 15 and 50 g/m², preferably between 25 and 35 g/m².

Each layer of non-woven web consists of continuous polyester filaments (spun bond) or staple fibers made of the same material, with a linear density between 0.5 and 6 dtex, preferably between 3 and 5 dtex.

Continuous high modulus reinforcement yarns, particularly made of glass, placed longitudinally, may be applied to the layer of non-woven fabric or inserted between two layers of non-woven fabric and bounded by mechanical needling, with needling density between 20 and 150 stitches/cm², or water entangling. Alternatively, the reinforcement may be formed by a net or by a woven/non-woven fabric of glass fibres.

The product thus formed is stabilized with a thermal treatment by calendering or in hot air oven at 220-240 °C, to melt the binding component, and is finally consolidated by impregnation with acrylic, styrol-butadiene, vinyl resins etc., at a content from 10 to 25 % by weight.

The following advantages are thus obtained:
Greater stiffness conferred by the binding component, which improves the dimensional stability of the support. The binding component increases the adhesion between the reinforcement yarns and the non-woven fabric layer, avoiding localized micro-failures which can lead to instability during the bitumen impregnation process. Furthermore, the binding component increases the adhesion force between the two or more layers of the support.

The textile support of the present invention exhibits a greater stiffness and a better planarity in particular at the edges, avoiding the instability phenomena which cause failure in the products described above.

The increase of dimensional stability obtained with the present invention is measured by the increase of elastic modulus at 180°C which reaches values of 1000-1600 daN per linear meter, considerably higher than the values of 80-100 daN obtained with the prior art (US 5,118,550).

### Example 1

Continuous filaments of PET with linear density 3.3 dtex, arranged to form two random webs, 3.6 m wide, are produced. A layer of polyamide -6 co-polymer based adhesive is applied on the inner surface of one of the two webs, using an engraved cylinder which transfers the adhesive, according to a diamond pattern, in amount equal to 5 g per m² of textile support.

The surface at the two ends of the cylinder, for a width of 12 cm on each side, has an spotted engraving, which can apply a layer of adhesive from 6 to 10 times higher than that transferred by the said diamond pattern of the main body of the cylinder.

The weight of the textile support constituted by two webs of polyester fibers and the adhesive before impregnation with resin was 189 g/m² in the center and 219 g/m² in the two side areas corresponding to the edges. An amount of adhesive 30 g/m² higher than the amount deposited on the center was applied on the edge's area.

The two webs were joined together and needled using Grotz Beckert 15x18x38x3 CB needles with penetration of 13 mm and needling density of 91 stitches/cm². The textile support was subjected to thermal treatment in rolling press heated to 240 °C, and then impregnated with a styrol-butadiene resin and dried in oven at 210 °C.

The final average weight of the support was 250 g/m² with a resin content equal to 21.5 % of the finished product weight.

The support was analyzed according to standard ISO 9073, to determine the mechanical properties at room temperature. Furthermore, 50x180 mm size specimens were taken for carrying out tensile tests in hot chamber at 180°C.

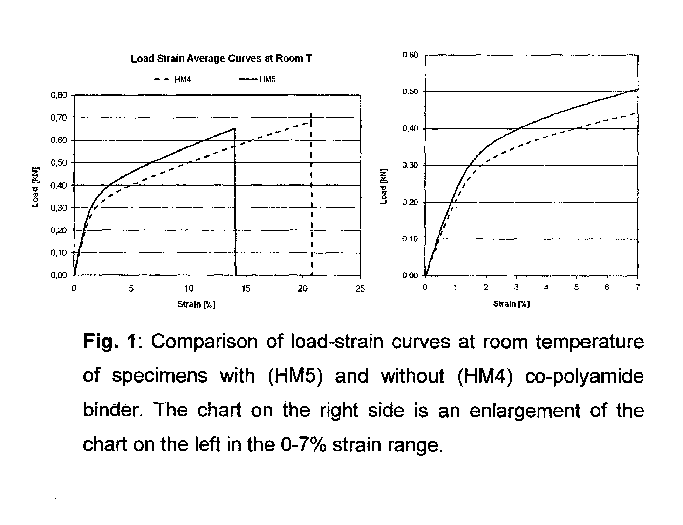

The results of tensile and de-lamination tests at room temperature are shown in Fig. 1, 2, 3 and in Tab. 1: with regards to the tensile tests, the curves were obtained as an average of the five specimens, to make the comparison with similar support prepared without the addition to polyamide-6 co-polymer.

The delamination load was evaluated on 50 x 300 mm specimens, manually delaminated on the shorter side for an approximate length of 30 mm. The two edges were inserted in the clamps placed at a distance of 25 mm in the configuration of standard ASTM D 2263.

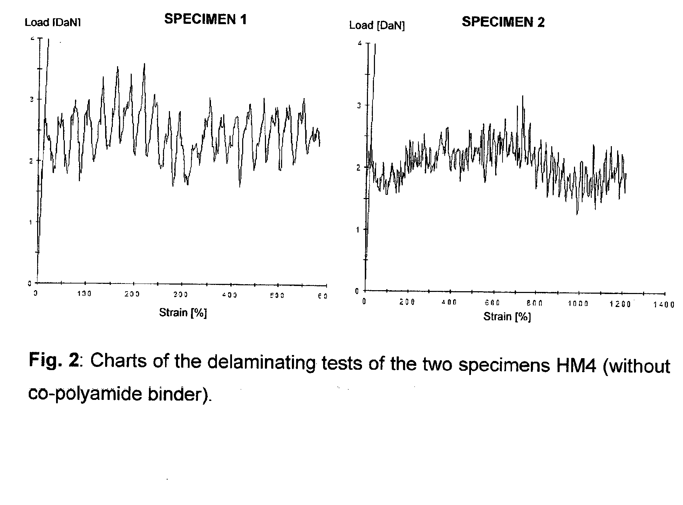

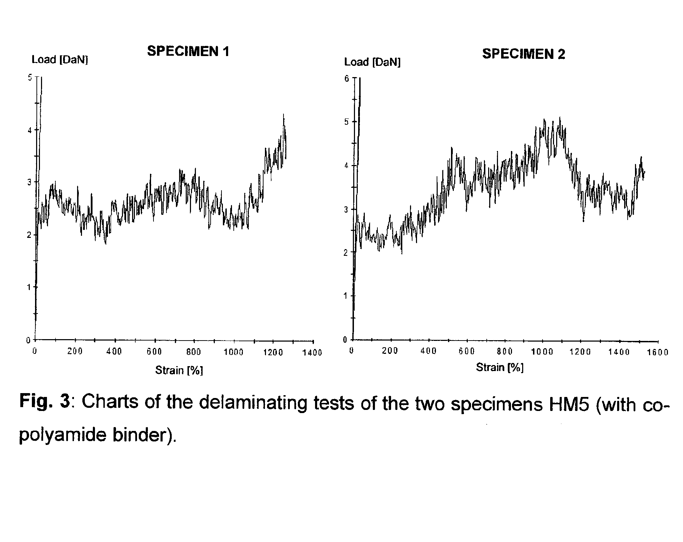

The de-lamination load was obtained as an average of the data of the two tests, shown in the chart in Fig. 2 for specimen HM4 and in Fig. 3 for specimen HM5.

**Tab. 1: Results of the tensile tests (Fig. 1) and de-lamination tests (Fig. 2 and 3) at room temperature of specimen HM4, without co-polyamide binder and specimen HM5, with co-polyamide binder.**

| | **With co-PA6 HM5** | **Without co-PA6 HM4** |
|---|---|---|
| **Grammage [g/m²]** | 250 | 230 |
| **Tensile strength [N/50mm]** | 716 | 687 |
| **Elongation at break [%]** | 14,1% | 21.3% |
| **Load @ 2% strain [N/50mm]** | 348 | 309 |
| **Tenacity at break [N/50mm/g*m²]** | 0.29 | 0.30 |
| **Young modulus [MPa]** | 263 | 253 |
| **Delamination load [DaN]** | 4.73 | 3.38 |

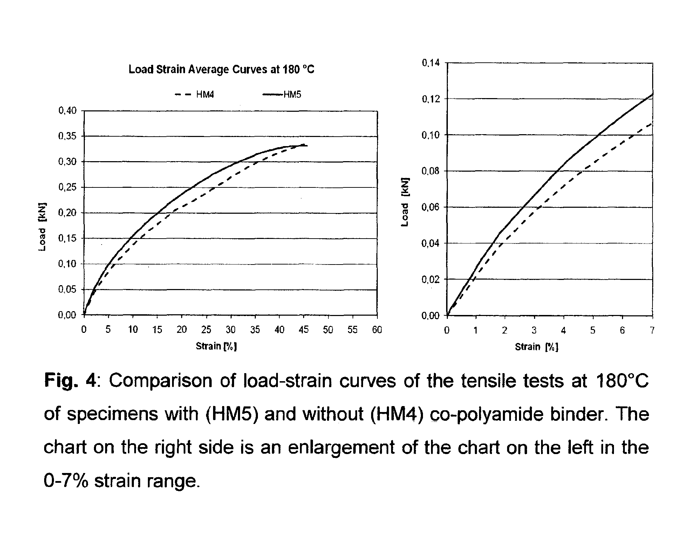

Fig. 4 and Tab. 2 show the results of tensile tests at 180°C: the curves are again obtained as an average of five specimens and are used to make the comparison with similar support reinforced without the addition of 6-polyamide co-polymer.

**Tab. 2: Results of tensile tests at 180°C of the specimens in Fig. 4.**

| | **With co-PA6 HM5** | **Without co-PA6 HM4** |
|---|---|---|
| **Grammage [g/m²]** | 250 | 230 |
| **Strain @ Load = 50 N** | 2.1% | 2.3% |
| **Strain @ Load = 80 N** | 3.8% | 4.3% |
| **Strain @ Load =100 N** | 5.2% | 6.0% |
| **Young modulus [MPa]** | 24 | 21 |

The support was impregnated with APP modified bitumen at a temperature of 195 °C for the production of a bituminous membrane, 4.5 mm thick, with deposition of mineral flakes on one face and application of polyolefin film on the other. Impregnation was carried out at a speed of 70 m/min with excellent results in terms of planarity of the membrane and absence of any distortion both in the central part and the edges.

## Claims

1. Textile support, particularly for bituminous membranes, consisting of at least one layer of non-woven fabric of synthetic fibers and a binding component having a melting point lower than that of the synthetic fibers of the layer of non-woven fabric, the assembly formed by said layer of non-woven fabric and by said binding component being subjected to a thermal treatment for melting of the binding component and being then consolidated by resin impregnation; **characterized in that** said binding component has a melting point from 30 to 50°C lower than the melting point of the synthetic fibres of the non-woven fabric and said binding component is present on the edges of the textile support in a greater quantity compared to the remaining surface of the textile support.

2. Textile support according to claim 1, **characterized in that** the binding component consists of polybutylene terephthalate, polyamide-6, co-polyester, co-polyamide, polyurethanes.

3. Textile support according to claim 1, **characterized in that** the binding component is added on the entire surface of the layer of non-woven fabric in the measure of 0.5 to 5 g/m², preferably 1.5 to 3 g/m², while in the edge's area of the finished textile support the binding component is added in the measure of 15 to 50 g/m², preferably 25 to 35 g/m².

4. Textile support according to claim 1, **characterized in that** each layer of non-woven fabric is made of continuous spunbond polyester filaments.

5. Textile support according to claim 1, **characterized in that** each layer of non-woven fabric is made of staple polyester fibers.

6. Textile support according to claim 1, 4 or 5, **characterized in that** said synthetic fibers have linear density between 0.5 and 6 dtex, preferably between 3 and 5 dtex.

7. Textile support according to claim 1, **characterized by** comprising continuous reinforcement yarns with high modulus, particularly made of glass, set longitudinally, applied to the layer of non-woven fabric or inserted between two layers of non-woven fabric and bounded by mechanical needling or water entangling.

8. Textile support according to claim 1, **characterized by** comprising a reinforcement formed by a net or by a woven / non-woven fabric of glass fibers.

9. Textile support according to claim 1, **characterized in that** said thermal treatment is carried out at a temperature of 200-240 °C.

10. Textile support according to claim 1, **characterized in that** the content of resin is comprised between 10 and 25 % by weight.

11. Textile support according to claim 1, **characterized in that** the chemical binding is applied by saturation.

12. Textile support according to claim 1, **characterized in that** the binder consists of synthetic resins and/or resins based on starch and/or derivates from cellulose.

13. Textile support according to claim 1, **characterized by** having a basis weight comprised between 20 and 500 g/m².

14. Textile support according to claim 7, wherein the needling density is comprised between 20 e 150 stitches/cm².

## Patentansprüche

1. Textiler Träger, insbesondere für bitumenhaltige Membranen, welche aus wenigstens einer Schicht aus einem Vliesstoff aus synthetischen Fasern und einer Binderkomponente besteht, welche einen Schmelzpunkt hat, die niedriger als der Schmelzpunkt der synthetischen Fasern der Schicht aus Vliesstoff liegt, wobei die Anordnung gebildet aus der Schicht aus Vliesstoff und der Binderkomponente eines Wärmebehandlung zum Schmelzen der Binderkomponente unterworfen wird und dann durch Hartimprägnierung verfestigt wird, **dadurch gekennzeichnet, dass** die Binderkomponente einen Schmelzpunkt von 30 bis 50° C niedriger als der Schmelzpunkt der synthetischen Fasern des Vliesstoffes hat, und dass die Binderkomponente an den Rändern des textilen Trägers mit einer größeren Menge im Vergleich zu der restlichen Menge des textilen Trägers vorhanden ist.

2. Textiler Träger nach Anspruch 1, **dadurch gekennzeichnet, dass** die Binderkomponente aus Polybuthylenterephtalat, Polyamid-6, Co-Polyester, Co-Polyamid, Polyurethan besteht.

3. Textiler Träger nach Anspruch 1, **dadurch gekennzeichnet, dass** die Binderkomponente auf die gesamte Fläche der Schicht aus Vliesstoff in einem Ausmaß von 0,5 bis 5 g/m², vorzugsweise 1,5 bis 3 g/m² aufgegeben wird, während die Randbereiche des fertiggestellten textilen Trägers die Binderkomponente in einem Ausmaß von 15 bis 50 g/m², vorzugsweise 25 bis 35 g/m² aufgegeben wird.

4. Textiler Träger nach Anspruch 1, **dadurch gekennzeichnet, dass** jede Schicht aus Vliesstoff aus kontinuierlichen spinngebundenen Polyesterfilamenten hergestellt ist.

5. Textiler Träger nach Anspruch 1, **dadurch gekennzeichnet, dass** jede Schicht aus Vliesstoff aus Stapelpolyesterfasern hergestellt ist.

6. Träger nach Anspruch 1, 4 oder 5, **dadurch gekennzeichnet, dass** die synthetischen Fasern eine lineare Dichte zwischen 0,5 und 6 dtex, vorzugsweise zwischen 3 und 5 dtex haben.

7. Textiler Träger nach Anspruch 1, **dadurch gekennzeichnet, dass** er kontinuierliche Verstärkungsgarne mit hohem Dehnungsmodul, insbesondere hergestellt aus Glas, aufweist, welche in Längsrichtung auf die Schicht aus Vliesstoff aufgebracht oder zwischen zwei Schichten aus Vliesstoff eingefügt und mittels mechanischem Vernadeln oder Wasserverhakung gebunden werden.

8. Textiler Träger nach Anspruch 1, **dadurch gekennzeichnet, dass** er eine Verstärkung aufweist, die von einem Netz oder von gewebten / nicht gewebten Materialien aus Glasfasern gebildet wird.

9. Textiler Träger nach Anspruch 1, **dadurch gekennzeichnet, dass** die Wärmebehandlung bei einer Temperatur von 200 bis 240°C durchgeführt wird.

10. Textiler Träger nach Anspruch 1, **dadurch gekennzeichnet, dass** der Gehalt an Harz zwischen 10 und 25 Gew.-% liegt.

11. Textiler Träger nach Anspruch 1, **dadurch gekennzeichnet, dass** das chemische Bindemittel durch Sättigung aufgebracht wird.

12. Textiler Träger nach Anspruch 1, **dadurch gekennzeichnet, dass** der Binder aus synthetischen Harzen und/oder Harzen besteht, die auf Stärke und/oder Derivaten von Zellulose basieren.

13. Textiler Träger nach Anspruch 1, **dadurch gekennzeichnet, dass** er ein Basisgewicht zwischen 20 und 500 g/m² hat.

14. Textiler Träger nach Anspruch 7, **dadurch gekennzeichnet, dass** die Nadeldichte zwischen 20 und 150 Stichen/cm² liegt.

## Revendications

1. Support textile, en particulier pour membranes bitumineuses, constitué d'au moins une couche d'étoffe non tissée à base de fibres synthétiques et d'un composant de liaison ayant un point de fusion inférieur à celui des fibres synthétiques de la couche d'étoffe non tissée, l'assemblage formé par ladite couche d'étoffe non tissée et par ledit composant de liaison étant soumis à un traitement thermique pour faire fondre le composant de liaison, puis consolidé par imprégnation de résine ; **caractérisé en ce que** ledit composant de liaison a un point de fusion de 30 à 50°C inférieur à celui des fibres synthétiques de l'étoffe non tissée et ledit composant de liaison est présent en plus grande quantité sur les bords du support textile que sur le reste de la surface du support textile.

2. Support textile selon la revendication 1, **caractérisé en ce que** le composant de liaison est constitué par un téréphtalate de polybutylène, un polyamide-6, un co-polyester, un co-polyamide, des polyuréthannes.

3. Support textile selon la revendication 1, **caractérisé en ce que** le composant de liaison est ajouté sur toute la surface de la couche d'étoffe non tissée à raison de 0,5 à 5 g/m², de préférence de 1,5 à 3 g/m², tandis que dans la zone de bord du support textile fini, le composant de liaison est ajouté à raison de 15 à 50 g/m², de préférence de 25 à 35 g/m².

4. Support textile selon la revendication 1, **caractérisé en ce que** chaque couche d'étoffe non tissée est constituée de filaments de polyester continus filés-liés.

5. Support textile selon la revendication 1, **caractérisé en ce que** chaque couche d'étoffe non tissée est à base de fibres polyester coupées.

6. Support textile selon la revendication 1, 4 ou 5, **caractérisé en ce que** lesdites fibres synthétiques ont une densité linéaire entre 0,5 et 6 dtex, de préférence entre 3 et 5 dtex.

7. Support textile selon la revendication 1, **caractérisé en ce qu'**il comprend des fils de renforcement continus de module élevé, en particulier à base de verre, déposés longitudinalement, appliqués à la couche d'étoffe non tissée ou insérés entre deux couches d'étoffe non tissée et liés par aiguilletage mécanique ou hydro-enchevêtrement.

8. Support textile selon la revendication 1, **caractérisé en ce qu'**il comprend un renforcement formé par un filet ou par une étoffe tissée/non tissée de fibres de verre.

9. Support textile selon la revendication 1, **caractérisé en ce que** ledit traitement thermique est mis en oeuvre à une température de 200 à 240°C.

10. Support textile selon la revendication 1, **caractérisé en ce que** la teneur en résine est comprise entre 10 et 25 % en poids.

11. Support textile selon la revendication 1, **caractérisé en ce que** la liaison chimique est appliquée par saturation.

12. Support textile selon la revendication 1, **caractérisé en ce que** le liant est constitué par des résines synthétiques et/ou des résines à base d'amidon et/ou des dérivés de cellulose.

13. Support textile selon la revendication 1, **caractérisé en ce qu'**il a un grammage compris entre 20 et 500 g/m².

14. Support textile selon la revendication 7, dans lequel la densité de l'aiguilletage est comprise entre 20 et 150 points de liage/cm².
